# FASCICULE DE BREVET EUROPEEN

(11) **EP 3 462 973 B1**
(45) Date de publication et mention de la délivrance du brevet: **29.01.2020**
(21) Numéro de dépôt: 17728666.3
(22) Date de dépôt: 01.06.2017
(51) Int. Cl.: A45C 13/20, B62B 3/14

(54) **ACCESSOIRE ANTIVOL**
DIEBSTAHLSICHERES ZUBEHÖRTEIL
ANTI-THEFT ACCESSORY

(30) Priorité: 03.06.2016 FR 1655103
(43) Date de publication de la demande: 10.04.2019
(73) Titulaire: Amalric, Bernard, 81160 Arthes (FR); Taillefer, Jean-Paul, 81600 Gaillac (FR); Cannac, Frédéric, 31660 Buzet sur Tarn (FR); Sauvager, Christophe, 56250 Sulniac (FR)
(72) Inventeur: Amalric, Bernard, 81160 Arthes (FR); Taillefer, Jean-Paul, 81600 Gaillac (FR); Cannac, Frédéric, 31660 Buzet sur Tarn (FR); Sauvager, Christophe, 56250 Sulniac (FR)
(74) Mandataire: LLR
(86) Numéro de dépôt international: PCT/IB2017/053234
(87) Numéro de publication internationale: WO 2017/208187

(56) Documents cités:
- WO-A1-2011/128523
- DE-A1- 19 529 468
- FR-A1- 3 007 351

## Description

La présente invention concerne un accessoire antivol.

Cet accessoire, qualifiable de lien universel, permet de protéger son utilisateur contre le vol à l'arraché. Il prévient également entre autres la chute et la perte d'objets et permet par exemple de solidariser rapidement et avec fiabilité un grand nombre d'éléments entre eux.

L'accessoire en question inclut un organe, tel qu'un jeton, de déverrouillage d'un système de consigne équipant un objet mobile, tel qu'un chariot de magasin à grande surface. Ledit organe de déverrouillage aura, d'une façon générale, la forme d'un jeton apte à déverrouiller un système de consigne tel que celui équipant un chariot de magasin à grande surface ; ledit organe de déverrouillage pourrait cependant également être sous une autre forme qu'un jeton, par exemple sous la forme d'une clé de déverrouillage d'un système de consigne équipant un vélo en libre-service.

Une personne faisant ses courses dans un grand magasin est fréquemment amenée à laisser son sac ou bagage à main accroché au chariot le temps d'aller prendre des produits dans les rayons du magasin, ou à l'extérieur du magasin lors du déchargement des achats du chariot dans le coffre de son véhicule par exemple, ce qui l'expose à un risque notable de vol de ce sac.

Pour remédier à ce problème, il a été conçu un lien antivol tel que divulgué par la publication de demande de brevet français N° FR 2 959 047 ou de demande de brevet Internationale correspondante N° WO 2011/128523. Les planches de dessins 1/9 à 6/9 annexées reproduisent différentes figures de ces dépôts antérieurs, montrant différentes formes de réalisation de ce lien.

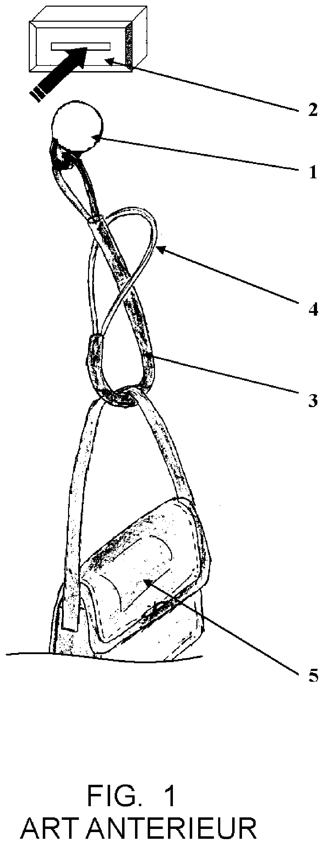

Comme cela est représenté sur la figure 1, ce lien antivol comprend, selon une première forme de réalisation, un jeton 1 apte à être inséré dans le boîtier 2 d'un système de consigne que comprend un chariot de magasin à grande surface, et un lien souple 3 formant une boucle 4, solidement relié au jeton 1. Le lien 3 est engagé autour de la sangle d'un sac ou bagage à main 5 puis est engagé, par son extrémité comportant le jeton 1, au travers de la boucle 4 et le jeton 1 est engagé dans la fente du boîtier 2, permettant ainsi de relier de façon solide et sûre le sac ou bagage à main 5 au chariot.

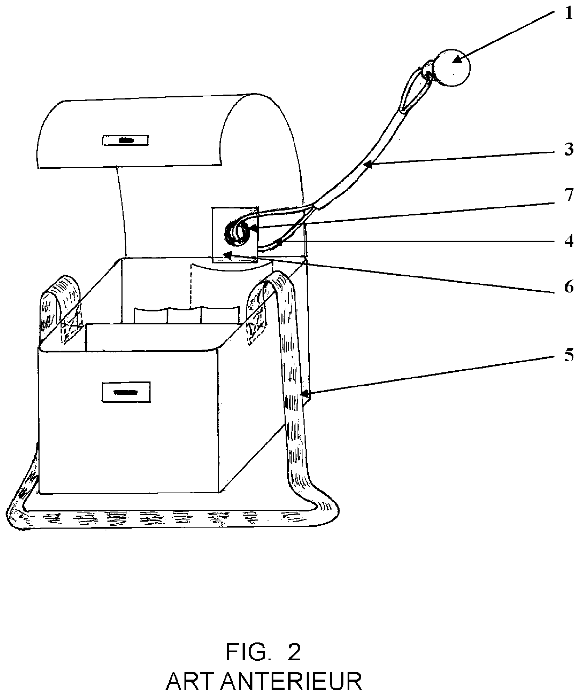

En variante, comme visible sur la figure 2, le bagage à main 5 ou objet à solidariser à un élément, ou à protéger du vol, ou de sa perte ou de sa chute, peut présenter une patte 6 pourvue d'un œillet 7 au travers duquel est engagée de façon permanente la boucle 4 que forme le lien 3.

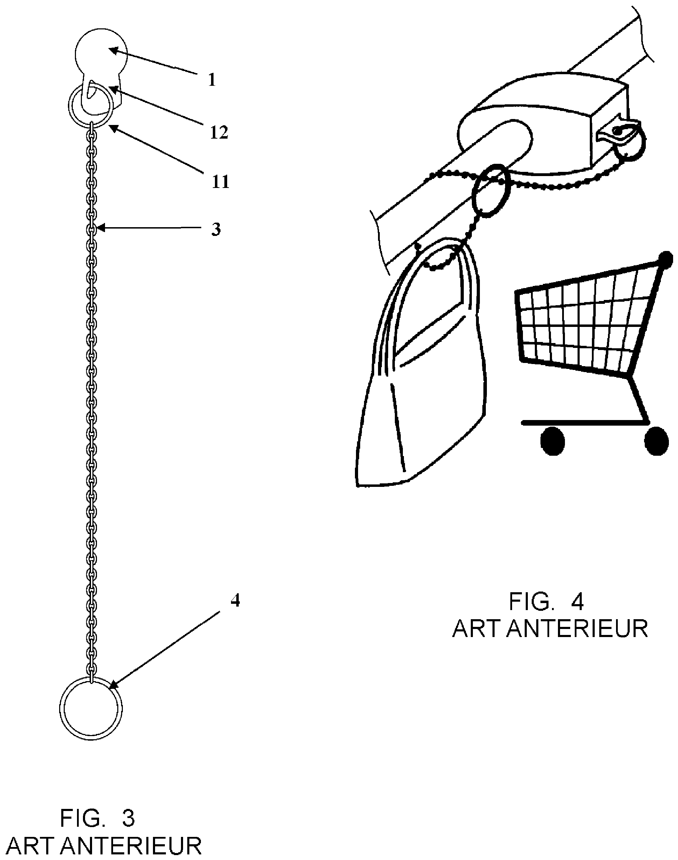

Selon une autre forme de réalisation illustrée sur la figure 3, le lien 3 est sous la forme d'une chaînette métallique et la boucle 4 est sous la forme d'un anneau. Le jeton 1 peut alors être relié à la chaînette au moyen d'un anneau 11 engagé au travers une ouverture que comprend une patte 12 solidaire du jeton 1. Cet accessoire est utilisable de la même façon que l'accessoire décrit précédemment, comme visible sur la figure 4.

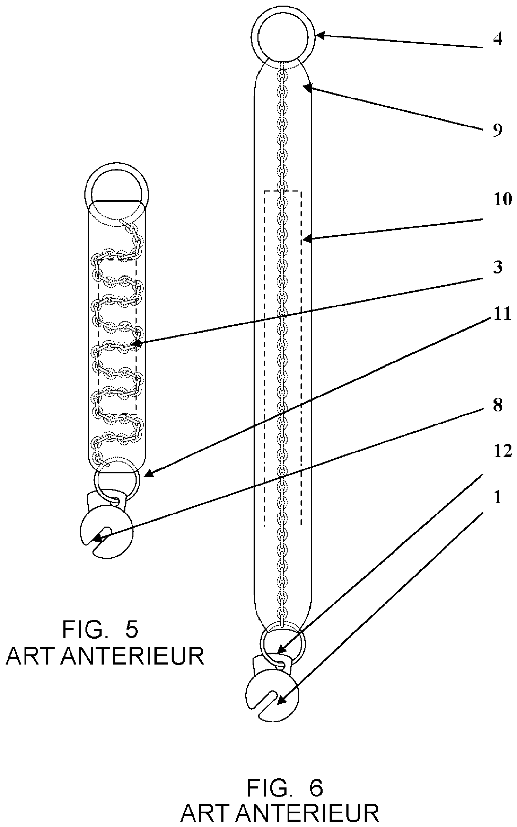

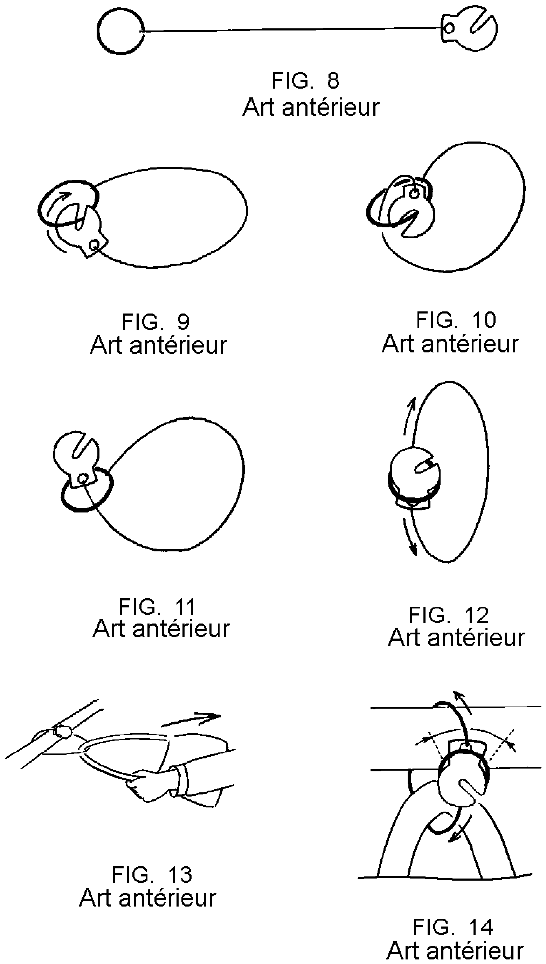

Selon encore une autre forme de réalisation, illustrée sur les figures 5 et 6, une encoche radiale 8 est aménagée dans le jeton 1, ayant une longueur telle que la distance séparant le fond de l'encoche 8 et le bord libre de la patte 12 (c'est-à-dire celui opposé au bord de la patte 12 relié au jeton 1) soit légèrement inférieure au diamètre intérieur de l'anneau 4 formant la boucle. Il en résulte que le passage du jeton 1 au travers de l'anneau 4 ne peut être réalisé qu'au moyen d'un engagement du jeton 1 sur l'anneau 4 au niveau de l'encoche 8, de la façon illustrée sur les figures 8 à 14, et que, en conséquence, une action volontaire soit nécessaire pour libérer l'accessoire vis-à-vis de la partie d'un sac à main autour de laquelle l'accessoire est engagé, cette action consistant à engager le jeton 1 sur l'anneau 4 au moyen de l'encoche 8 pour refaire passer le jeton 1 et la patte 12 au travers de l'anneau 4.

Dans la forme de réalisation également illustrée sur les figures 5 et 6, l'accessoire comprend en outre, par souci d'esthétique, une housse 9 enveloppant la chaînette 3, étirable élastiquement dans la direction longitudinale. La longueur à l'état non étiré de cette housse 9 est nettement inférieure à celle de la chaînette, permettant d'avoir un encombrement réduit de l'accessoire lorsque ce dernier n'est pas utilisé (voir la figure 5 en comparaison avec la figure 6.

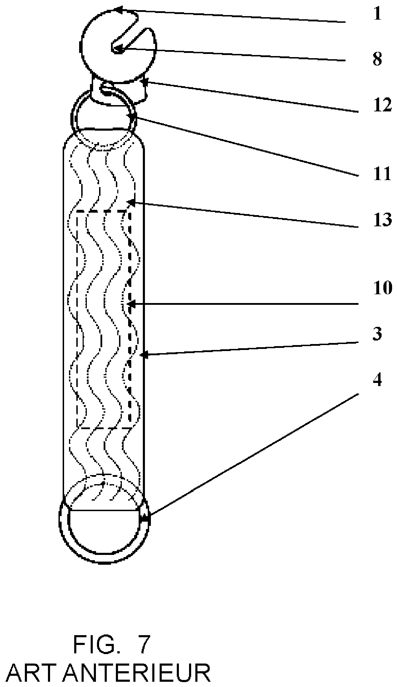

Comme illustré par la figure 7, le lien 3 peut être composé et/ou armé de fibres métalliques, naturelles ou synthétiques, ayant une résistance mécanique et/ou à la coupure, et adapté à la fonction antivol à l'arraché, anti-perte et anti chute par exemple.

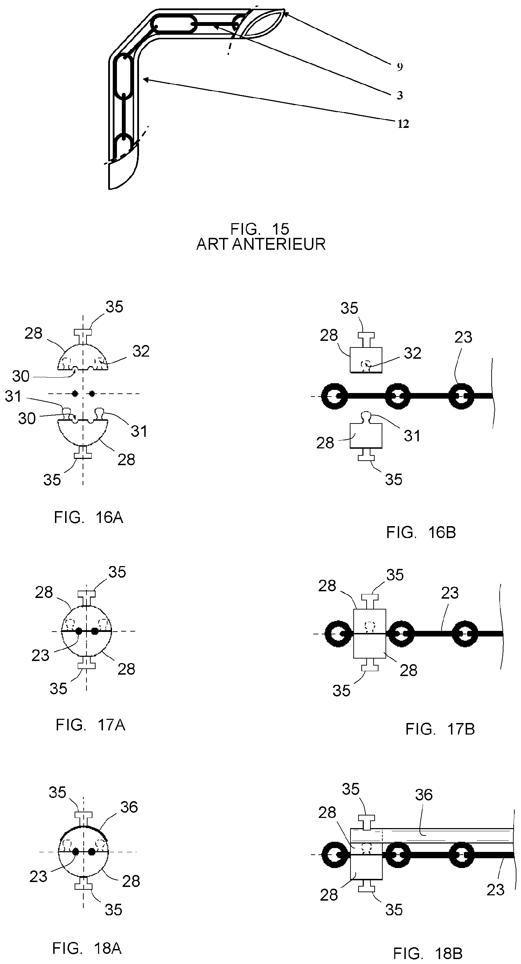

L'accessoire selon ces formes de réalisation n'est cependant pas entièrement satisfaisant pour plusieurs raisons :
∘ dans sa version avec housse élastique, lorsque la housse 9 (fig. 5) n'est pas étirée, la chainette 3 est disposée de façon aléatoire à l'intérieur de cette housse, générant sur la housse des déformations et bossages également aléatoires et peu esthétiques ;
∘ dans sa version avec housse élastique, lorsque la housse 9 (fig. 5) n'est pas étirée, et que le lien universel est en position pliée, la chaîne exerce une pression sur l'élastique et casse la courbe arrondie et homogène de celui-ci, cette pression engendre des facettes dans le dessin de la courbe et ce qui rend le produit en position fermée non esthétique (fig. 15) ;
∘ dans sa version avec housse élastique, lorsque la housse 9 (fig.5) n'est pas étirée, et que le lien universel est en position pliée, le fil de la chaîne exerce une pression sur l'élastique et va donc tendre très localement les fibres de l'élastique et faire apparaître, par rotation localisée de ces fibres élastique, une partie non imprimée des fibres et donc déforme et dénature le marquage imprimé sur l'extérieur de la housse élastique ;
∘ dans sa version avec housse élastique, lorsque la housse 9 (fig.5) n'est pas étirée, et que le lien universel est en position pliée, le fil de la chaine de chaque maillon en contact avec la partie extérieure de l'élastique, exerce une pression sur l'élastique qui se traduit par un bosselage régulier de ce dernier et donc confirme la présence d'une pièce rigide à l'intérieur de la housse élastique.
∘ l'esthétique de l'accessoire n'est pas aboutie en particulier au niveau des extrémités de la housse 9 ;
∘ l'assemblage de la housse 9 aux anneaux 4 et 11 est peu pratique à réaliser, ce qui ne permet pas une production de série à bas coût ;
∘ la conception représentée, et particulièrement son encombrement, n'est pas adaptée à ce que l'accessoire puisse être utilisé à la manière d'un porte-clés ou d'un jeton de déverrouillage d'un système de consigne.

Bien que l'accessoire selon les demandes de brevet antérieures précitées se soit avéré globalement fonctionnel et opérationnel, il reste néanmoins trop limitatif à la fonction de lien universel pour entre autres, la protection contre le vol à l'arraché, pour solidariser plusieurs éléments entre eux, prévenir de la chute ou la perte d'objets. Des perfectionnements sont apparus nécessaires pour satisfaire plus largement aux besoins des consommateurs, en particulier celui de pouvoir disposer d'un accessoire plus universel que l'accessoire existant, ayant, outre une fonction antivol à l'arraché, une fonction anti-perte et anti chute de tous types d'objets et une capacité à solidariser facilement tous types d'éléments. Cet accessoire remplit également les fonctions de porte-clés, support publicitaire ou jeton de déverrouillage de système de consigne.

La présente invention a donc pour objectif principal de fournir un accessoire remédiant à ces inconvénients.

L'invention a aussi pour objectif de fournir un accessoire qui soit apte à répondre aux besoins, applications et particularités très spécifiques et variés de chaque utilisateur.

L'invention a également pour objectif de fournir un accessoire qui soit compact lorsque qu'il n'est pas utilisé, qui a une aptitude améliorée à résister à l'abrasion produite par la chaînette à l'intérieur de la housse élastique pendant les allongements de cette housse, et qui puisse faire l'objet d'une réalisation industrielle à bas coût.

L'accessoire selon l'invention est définie par les caractéristiques de la revendication 1, comprenant un lien, un organe de déverrouillage, tel qu'un jeton, relié au lien, une boucle ou un anneau également solidaire du lien, situé en un emplacement de ce dernier distant de celui sur lequel se trouve l'organe de déverrouillage, et une housse allongée à l'intérieur de laquelle est placé le lien.

Selon l'invention,
- l'accessoire comprend deux paires de pièces de liaison destinées à réaliser une liaison entre le lien et la housse dans la direction longitudinale du lien, la liaison étant telle que chaque paire de liaison, lorsqu'elle est engagée sur le lien, est immobilisée par rapport au lien dans cette direction longitudinale ; chaque pièce de liaison d'une paire de pièces de liaison comprend des moyens d'assemblage pour son assemblage à l'autre pièce de liaison de la même paire de pièces de liaison, les deux pièces de liaison de cette paire de pièces de liaison étant ainsi aptes à être assemblées l'une à l'autre en enserrant entre elles ladite portion du lien ; au moins une pièce de liaison de chaque paire de pièces de liaison comprend en outre un moyen de liaison à la housse ; et
- la housse comprend des moyens de liaison permettant sa liaison aux moyens de liaison que comprennent les pièces de liaison respectives desdites paires de pièces de liaison.

Les deux pièces de liaison d'une première paire de pièces de liaison sont ainsi aptes à venir enserrer en sandwich, de chaque côté du lien, une portion de ce lien au niveau d'une première extrémité du lien et à être assemblées l'une à l'autre, tandis que, de la même façon, les deux pièces de liaison d'une deuxième paire de pièces de liaison sont aptes à venir enserrer une portion du lien au niveau de la deuxième extrémité de ce lien, opposée à la première extrémité. Une fois les deux paires de pièces de liaison ainsi fixées à la chaînette, la housse peut être engagée sur la chaînette et être fixée aux paires de pièces de liaison respectives grâce aux moyens de liaison respectifs comprend cette housse et que comprennent ces paires de pièces de liaison.

L'assemblage du lien et de la housse est ainsi réalisé de façon simple et rapide, ce qui permet de parfaitement remédier aux inconvénients précités de l'accessoire selon l'art antérieur et de parfaitement atteindre les objectifs également précités.

En particulier, l'accessoire est, entre autres :
- compact lorsque qu'il est utilisé par exemple pour ses fonctions porte-clés et jeton de déverrouillage de système de consigne ;
- résistant à l'abrasion produite par la chaînette à l'intérieur de la housse élastique pendant les mouvements extension/retrait de la housse élastique ;
- économique et industrialisable facilement d'un point de vue de sa fabrication ;
- solide mécaniquement avec en particulier ayant une grande résistance à la traction, à la coupure et au cisaillement ;
- souple, pour une extension et un usage facile et fluide dans toutes les situations de la vie courante ;
- d'une apparence extérieure qui rende quasi-invisible les renforts internes et résistants mécaniquement à la fonction souhaitée ;
- communiquant avec un marquage qualitatif, lavable, en quadrichromie et personnalisable industriellement selon la demande de l'annonceur ;
- un produit dont la qualité et l'esthétique aura une durée de vie respectable afin que le dit accessoire ne soit pas assimilable à un gadget ou à un produit jetable.

De préférence, l'accessoire comprend des moyens d'assemblage permettant l'assemblage d'une extrémité du lien à l'autre extrémité de ce lien, de telle façon que le lien puisse être replié sur lui-même de façon à former une sorte de breloque de porte-clés et que, par conséquent, l'accessoire puisse être utilisé comme un porte-clés.

De préférence, dans ce cas, lesdits moyens de liaison que forme chaque paire de pièces de liaison forme également lesdits moyens d'assemblage.

Ces moyens d'assemblage pourraient être sous la forme d'un bouton-pression, l'un des moyens de liaison formant une cavité femelle et l'autre moyen de liaison formant un organe mâle apte à être engagé et retenu dans la cavité femelle ; selon une autre forme de réalisation, préférée, de l'invention dans ce cas, les moyens d'assemblage sont sous la forme d'un assemblage de type à baïonnette, l'un des moyens de liaison formant une cavité à ouverture d'entrée rectangulaire, et l'autre moyen de liaison formant une tête d'assemblage en forme de T, apte à être engagée au travers de ladite ouverture d'entrée puis à être pivotée sur un quart de tour de façon à être retenue dans ladite cavité.

Le lien peut notamment être sous la forme d'une chaîne ou chaînette, et ladite portion du lien est alors un maillon ou une portion de maillon de cette chaîne ou chaînette.

La housse pourrait inclure une ou plusieurs parties élastiques allongées présentant, à un état de non déformation, une longueur inférieure à celle de la chaînette, permettant de placer cette housse dans un état rétracté dans lequel les maillons de la chaînette sont repliés à l'intérieur d'elle ; selon une autre possibilité, l'accessoire comprend une gaine ou une bande de matière élastique étirable longitudinalement, qui présente des moyens de liaison permettant sa liaison aux moyens de liaison que comprennent les paires respectives de pièces de liaison.

Cette gaine ou bande élastique est ainsi destinée à être reliée aux paires respectives de pièces de liaison ; lorsqu'elle n'est pas étirée longitudinalement et que la housse n'est pas étirable longitudinalement, elle permet de maintenir la housse selon une longueur de rétractation du lien et de donner à l'accessoire de forme compacte ; lorsqu'elle est étirée en longueur, la gaine ou bande élastique permet l'étirement longitudinal de la housse, et donc l'allongement du lien. Lorsque la housse est étirable longitudinalement et que le lien est une chaîne ou chaînette, la gaine ou bande élastique permet une force de rappel élastique supplémentaire, et joue le rôle de tuteur souple et en courbe pour la chaîne qui est à l'intérieur de la housse, ce qui évite que la pression directe de la chaîne sur la housse casse la courbe arrondie et homogène de celui-ci. Cette gaine ou bande élastique évite donc les facettes dans le dessin de la courbe de l'accessoire.

Dans la position d'assemblage des deux extrémités du lien l'une à l'autre, cette gaine ou bande élastique permet également d'éviter que le fil de la chaîne ou chaînette exerce une pression sur les brins élastiques que peut inclure la housse ce qui tend très localement ces brins et fait apparaître des parties non imprimées de la housse et donc déforme et dénature le marquage imprimé sur l'extérieur de cette housse élastique.

Toujours dans la position d'assemblage des deux extrémités du lien l'une à l'autre, le fil de la chaine de chaque maillon en contact avec la partie intérieure de l'élastique et en pression sur le côté extérieur de l'accessoire fermé en courbe, entraine une déformation qui se traduit par un bosselage régulier de ce dernier et donc confirme la présence d'une pièce rigide à l'intérieur de la housse élastique. La présence de cette gaine ou bande élastique à l'intérieur de la housse permet de lisser ces bosselages et donc de masquer ces déformations.

La doublure que permet de constituer cette gaine ou bande élastique permet par conséquent de conférer à l'accessoire un aspect visuel amélioré par rapport à l'accessoire selon la technique antérieure et améliore en plus largement la résistance mécanique à l'arrachement et à la coupure de l'accessoire.

Selon une forme de réalisation préférée de l'invention,
- le moyen de liaison que comprend ladite au moins une pièce de liaison de chaque paire de pièces de liaison est sous la forme d'un plot en forme de champignon, c'est-à-dire présentant une portion de base et une tête élargie ;
- chaque moyen de liaison que comprend la housse est sous la forme d'un trou apte à être inséré de manière ajustée sur ledit plot.

L'assemblage de la housse à ladite pièce de liaison est ainsi réalisé par simple insertion, sur le plot, de la portion de la housse comprenant le trou précité, cette portion de la housse étant retenue sur le plot de manière fiable grâce à la tête élargie que forme ce plot.

Dans ce même cas dans lequel lesdits moyens de liaison sont sous la forme de plots en forme de champignon, les moyens de liaison que comprend ladite gaine ou bande élastique sont de préférence sous la forme de trous aptes à être insérés de manière ajustée sur ces plots. L'assemblage de ladite gaine ou bande élastique aux paires de pièces de liaison est ainsi réalisé de manière simple et rapide.

De préférence,
- chaque pièce de liaison de chaque paire de pièces de liaison comprend un plot tel que précité, les deux plots d'une même paire de pièces de liaison étant disposés de manière à faire saillie sur deux côtés opposés de cette paire de pièces de liaison, et
- la housse comprend, à chacune de ses portions d'extrémité, deux trous tels que précités, aménagés sur deux côtés opposés de la portion d'extrémité.

L'assemblage de la housse aux paires de pièces de liaison est ainsi réalisé sur deux côtés opposés de ces paires, donc de manière parfaitement résistante.

De préférence, l'accessoire inclut deux capuchons aptes à être engagés sur les extrémités respectives du lien et de la housse, chaque capuchon présentant une longueur telle qu'il recouvre les deux pièces de liaison lorsqu'il est engagé sur l'extrémité du lien et de la housse, et comprend des moyens de liaison auxdites pièces de liaison.

L'accessoire présente ainsi un aspect visuel favorable.

Dans le cas où chaque pièce de liaison comprend un plot tel que précité, lesdits moyens de liaison des capuchons sont constitués par des trous aptes à être engagés sur ces plots.

Avantageusement, dans ce cas, chaque capuchon comprend deux trous le rendant apte à être engagé sur les plots que comprennent les pièces de liaison d'une même paire de pièces de liaison.

Cet engagement permet d'assurer le maintien en place des capuchons par rapport au reste de l'accessoire.

Les deux pièces de liaison d'une même paire de pièces de liaison peuvent être formées par des pièces séparées l'une de l'autre ; selon une forme de réalisation possible de l'invention, toutefois, ces deux pièces de liaison sont reliées l'une à l'autre par une charnière-film et leurs moyens respectifs d'assemblage l'une à l'autre sont constitués par des moyens de prise à inter-engagement, situés sur un côté de ces deux pièces de liaison opposé à celui sur lequel se trouve ladite charnière-film.

Ainsi, la portion du lien sur laquelle doivent être montées les deux pièces de liaison est placée dans la demi-empreinte de l'une des deux pièces de liaison puis la deuxième pièce de liaison est rabattue contre la première pièce de liaison au moyen de la charnière-film, jusqu'à venue en prise réciproque desdits moyens de prise à inter-engagement.

Le montage des pièces de liaison sur le lien est, de cette façon, réalisé de manière facilitée.

L'invention sera bien comprise, et d'autres caractéristiques et avantages de celle-ci apparaîtront, en référence au dessin schématique annexé, lequel représente, à titre d'exemples non limitatifs, plusieurs formes de réalisation possible de l'accessoire concerné.
Les figures 16A à 20B sont des vues schématiques d'une partie de l'accessoire selon une première forme de réalisation, au cours de cinq étapes successives de constitution de cet accessoire ; parmi ces figures, les figures 16A, 17A, 18A, 19A et 20A montrent une portion de l'accessoire en bout, par une de ses extrémités, et les figures 16B, 17B, 18B, 19B et 20B montrent cette portion de l'accessoire de côté ; les figures 16A, 17A, 18A, 19A et 20A et les figures 16B, 17B, 18B, 19B et 20B se correspondent respectivement les unes les autres ;
les figures 21 à 22 sont des vues schématiques partielles de l'accessoire selon une deuxième forme de réalisation, ces figures étant respectivement similaires aux figures 16A et 17A ;
les figures 23 et 24 sont des vues de l'accessoire de côté, selon deux états d'utilisation ;
la figure 25 illustre la capacité anti-coupe de l'accessoire ;
la figure 26 est une vue homologue à la figure 15, illustrant l'aspect lisse que présente accessoire lorsqu'il est plié ;
la figure 27 est une vue de l'accessoire selon une autre forme de réalisation, avec coupe partielle d'une housse et d'une bande élastique que comprend l'accessoire, les retraits d'un capuchon que comprend également cet accessoire ; et
les figures 28 à 30 sont des vues en perspective, à échelle agrandie, des deux extrémités de l'accessoire, au cours de trois phases successives d'assemblage de ses extrémités.

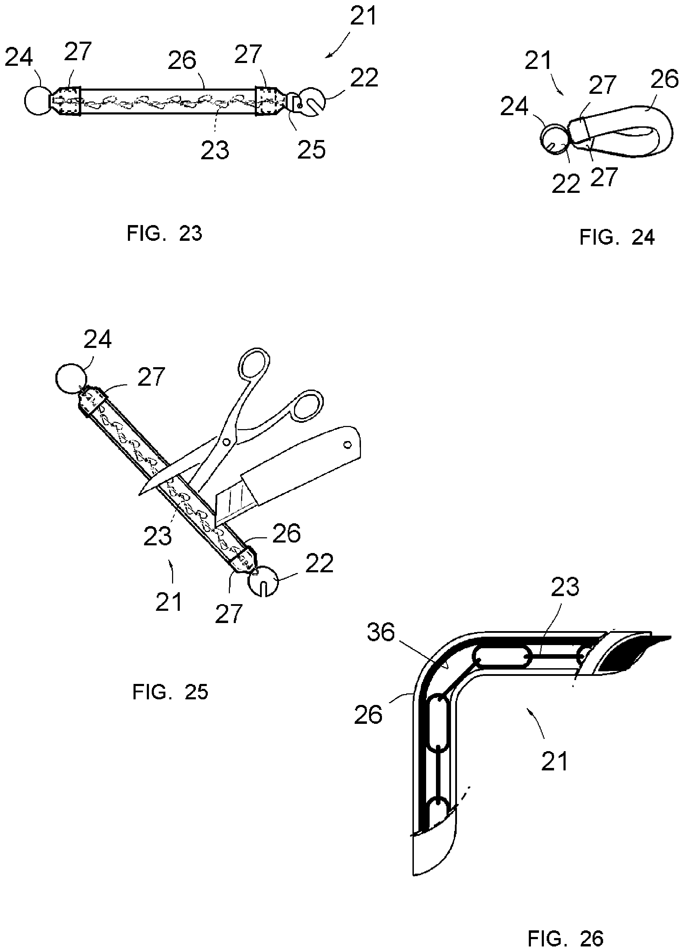

La figure 23 représente un accessoire antivol 21 du même type que ceux décrits précédemment faisant partie de l'art antérieur, c'est-à-dire incluant un jeton 22, une chaînette 23, un anneau 24 de réception du jeton 22 de la manière précitée, relié au dernier maillon d'une extrémité de la chaînette 23, un anneau 25 de liaison entre le dernier maillon de l'extrémité opposée de la chaînette 23 et le jeton 22, une housse 26 dans laquelle est placée la chaînette 23, et deux capuchons 27 engagés chacun sur une extrémité de la housse 26.

Le jeton 22, la chaînette 23, les anneaux 24 et 25 sont identiques ou très similaires à ceux représentés sur les figures 3 et 5 ou 6.

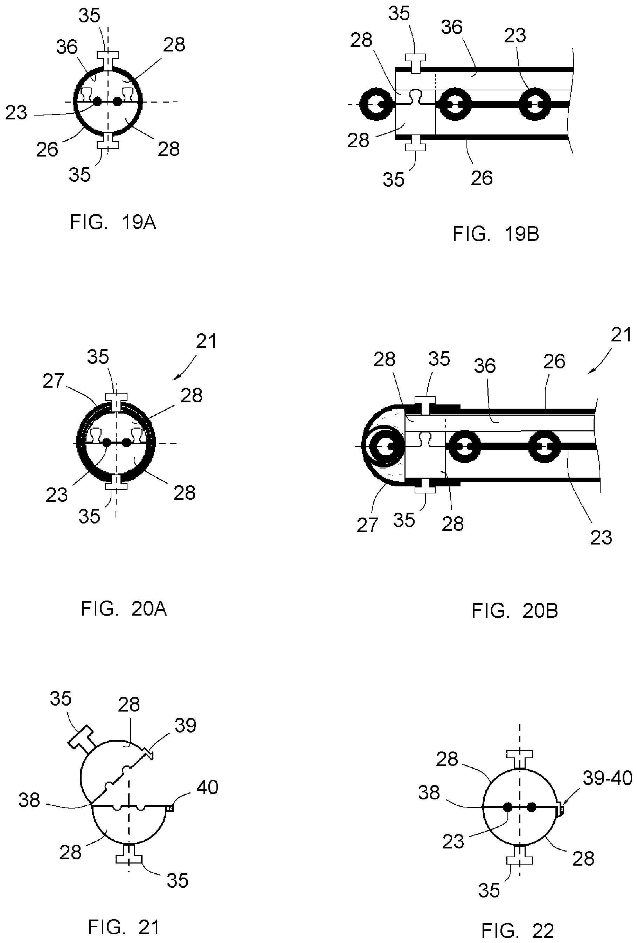

Les figures 20A et 20B illustrent de façon schématique la structure d'une extrémité longitudinale de l'accessoire 21 ; on y retrouve la chaînette 23, la housse 26 et le capuchon 27 que reçoit cette extrémité, et il apparaît que ladite extrémité comprend en outre une paire de pièces de liaison 28. Sur ces figures 20A et 20B, les anneaux 24 ou 25 ne sont pas représentés.

L'autre extrémité de la chaînette 23 comprend une paire de pièces de liaison 28 identique et montée de la même façon sur la chaînette 23.

Les figures 16A et 16B illustrent l'extrémité de la chaînette 23 et les pièces 28 dans une position de désassemblage par rapport à cette extrémité. Il apparaît que chaque pièce 28 présente une face par laquelle elle est destinée à être assemblée à l'autre pièce 28, et qu'elle présente au niveau de cette face une demi-empreinte 30 de réception une portion d'un maillon de la chaînette 23. Il apparaît également que l'une des pièces 28 comprend, de part et d'autre de cette demi-empreinte 30, des plots d'assemblage 31 à têtes arrondies, aptes à être encliquetés dans des cavités correspondantes 32, de forme ajustée à celle de ces plots 31, ces cavités étant aménagées dans l'autre pièce 28. L'encliquetage des plots 31 dans les cavités 32 est rendu possible par le léger degré de déformation élastique de la matière synthétique, de type courant, constituant les pièces 28.

Il apparaît en outre que chaque pièce 28 comprend, du côté opposé à ladite face, un plot 35 en forme de champignon, c'est-à-dire ayant une tête qui est élargie par rapport à une partie de base. Chaque plot fait saillie de la pièce 28 vers l'extérieur, et les deux plots 35 de la paire de pièces 28 se trouvent, lorsque les deux pièces 28 sont assemblées l'une à l'autre comme visible sur les figures 17A et 17B, sur deux côtés opposés de cette paire de pièces.

En référence aux figures 18A et 18B, il apparaît que l'accessoire 21 inclut également une bande 36 destinée à être mise en place sur l'une des deux pièces 28. Cette bande 36 est en un matériau élastiquement déformable, par exemple en élastomère ou en caoutchouc, et présente un trou grâce auquel elle peut être engagée de manière ajustée, et retenue, sur l'un des deux plots 35 de l'une des deux pièces 28, l'autre extrémité de cette pièce présentant un trou identique et étant engagée de manière ajustée, et retenue, sur l'un des deux plots 35 de la paire de pièce 28 fixée à l'autre extrémité de la chaînette 23. Il apparaît que la bande 36 présente, dans l'exemple représenté, une largeur telle qu'elle s'étend de part et d'autre du plot 35, sur une large partie de la surface de la pièce 28, et que, par conséquent, elle recouvre largement les maillons de la chaînette 23.

Les figures 19A et 19B montrent la housse 26 engagée sur les pièces 28. Comme cela se comprend, l'extrémité de cette housse 26 présente deux trous situés sur deux côtés opposés ; la portion de cette housse comprenant l'un de ces trous est apte à être engagée de manière ajustée sur l'un des plots 35 tandis que la portion de cette housse comprenant l'autre de ces trous est apte à être engagée sur l'autre plot 35, cet engagement assurant l'engagement de la bande élastique 36 sur le plot 35 correspondant.

L'autre extrémité de la housse comprend des trous identiques, pour la liaison de la housse aux pièces 28 reliées à cette autre extrémité.

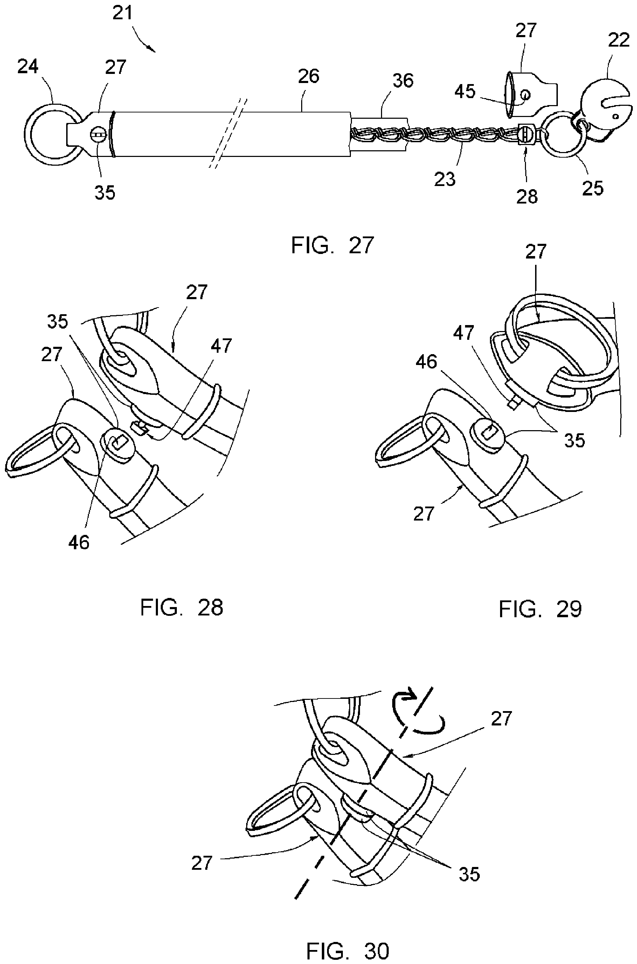

Une fois l'assemblage réalisé, chaque capuchon 27 est engagé sur l'extrémité de la housse 26, puis, étant en matériau élastique tel que du caoutchouc, est engagé sur les plots 35 grâce à un trou 45 qu'il comprend (visible sur la figure 27), ce qui assure sa mise en place. Ce capuchon 27 est percé d'un trou transversal venant en coïncidence du dernier maillon de la chaînette 23, permettant ainsi l'engagement de l'un ou l'autre des anneaux 24,25 au travers de ce dernier maillon.

Les figures 21 et 22 montrent une autre forme de réalisation de la paire de pièces 28, dans laquelle les deux pièces 28 sont reliées l'une à l'autre par une charnière-film 38, et dans laquelle les moyens respectifs d'assemblage de ces pièces 28 l'une à l'autre sont constitués par une dent d'encliquetage 39 solidaire de l'une des pièces 28, sur le côté de cette pièce opposé à celui sur lequel se trouve la charnière-film 38, et par une gâche 40 aménagée sur l'autre pièce 28 en correspondance de la dent 39, cette dent 39 étant destinée à venir s'encliqueter dans cette gâche.

La figure 24 montre que l'accessoire 21 peut-être replié sur lui-même tout en conservant un bon aspect visuel, la bande élastique 36 permettant de rendre relativement lisse et régulière la surface extérieure de la housse 26 lorsque l'accessoire 21 est plié, nonobstant la présence des maillons de la chaînette 23, ainsi que cela apparaît sur la figure 26 en comparaison avec la figure 15.

La figure 25 illustre quant à elle le fait que l'accessoire 21 ne peut pas être coupé au moyen d'une paire de ciseaux ou d'un cutter, du fait de la présence de la chaînette 23, laquelle est métallique, ce qui confère à l'accessoire 21 une parfaite capacité antivol.

Les figures 27 à 30 illustrent une autre forme de réalisation de l'accessoire 21. Les éléments identiques ou similaires à ceux déjà décrits sont désignés par les mêmes références numériques.

Dans ce cas, le plot 35 de l'une des pièces de liaison de l'une des paires de pièces 28 forme une cavité à l'intérieur de lui, débouchant sur l'extérieur par une ouverture d'entrée 46 rectangulaire, et le plot 35 de l'une des pièces de liaison de l'autre des paires de pièces 28 forme une tête d'assemblage 47 en forme de T, apte à être engagée au travers de ladite ouverture d'entrée 46 puis à être pivotée sur un quart de tour de façon à être retenue dans ladite cavité, comme bien illustré par les figures 28 à 30.

Cette cavité, cette ouverture 46 et cette tête d'assemblage 47 forment ainsi des moyens d'assemblage de type à baïonnette, permettant que la partie de l'accessoire 21 formé par la chaînette 23, la housse 26 et la bande 36 puisse être repliée comme visible sur la figure 24 ; cette partie peut donc être repliée sur elle-même de façon à former une sorte de breloque de porte-clés, faisant que l'accessoire 21 peut être utilisé comme un porte-clés.

L'invention fournit donc un accessoire 21 ayant, outre une fonction antivol, une fonction anti-perte de tout type d'objet, et qui est apte à être utilisé à d'autres fins qu'un antivol, telles que par exemple en tant que porte-clefs ou support publicitaire. L'accessoire 21 est également compact lorsque qu'il n'est pas utilisé, a une aptitude améliorée à résister à l'abrasion produite par la chaînette 23 à l'intérieur de la housse élastique 26 pendant les allongements de cette housse, et peut faire l'objet d'une réalisation industrielle à bas coût.

## Revendications

1. Accessoire antivol (21) incluant un organe, tel qu'un jeton (22), de déverrouillage d'un système de consigne équipant un objet mobile, tel qu'un chariot de magasin à grande surface, un lien (23), relié audit organe (22), une boucle ou un anneau (24) également solidaire du lien (23), situé en un emplacement de ce dernier distant de celui sur lequel se trouve l'organe de déverrouillage (22), et une housse allongée (26) à l'intérieur de laquelle est placé le lien (23) ;
**caractérisé en ce que** :
- l'accessoire (21) comprend deux paires de pièces de liaison (28) destinées à réaliser une liaison entre le lien (23) et la housse (26) dans la direction longitudinale du lien (23), la liaison étant telle que chaque paire de liaison (28), lorsqu'elle est engagée sur le lien, est immobilisée par rapport au lien (23) dans cette direction longitudinale ; chaque pièce de liaison (28) d'une paire de pièces de liaison comprend des moyens d'assemblage (31, 32 ; 39, 40) pour son assemblage à l'autre pièce de liaison (28) de la même paire de pièces de liaison, les deux pièces de liaison (28) de cette paire de pièces de liaison étant ainsi aptes à être assemblées l'une à l'autre en enserrant entre elles ladite portion du lien (23) ; au moins une pièce de liaison (28) de chaque paire de pièces de liaison comprend en outre un moyen (35) de liaison à la housse (26) ; et
- la housse (26) comprend des moyens permettant sa liaison aux moyens de liaison (35) que comprennent les pièces de liaison (28) respectives desdites paires de pièces de liaison.

2. Accessoire (21) selon la revendication 1, **caractérisé en ce qu'**il comprend des moyens d'assemblage permettant l'assemblage d'une extrémité du lien à l'autre extrémité de ce lien, de telle façon que le lien puisse être replié sur lui-même de façon à former une sorte de breloque de porte-clés et que, par conséquent, l'accessoire puisse être utilisé comme un porte-clés.

3. Accessoire (21) selon la revendication 2, **caractérisé en ce que** lesdits moyens de liaison que forme chaque paire de pièces de liaison forment également lesdits moyens d'assemblage.

4. Accessoire (21) selon la revendication 3, **caractérisé en ce que** les moyens d'assemblage sont sous la forme d'un assemblage de type à baïonnette, l'un des moyens de liaison formant une cavité à ouverture d'entrée rectangulaire, et l'autre moyen de liaison formant une tête d'assemblage en forme de T, apte à être engagée au travers de ladite ouverture d'entrée puis à être pivotée sur un quart de tour de façon à être retenue dans ladite cavité.

5. Accessoire (21) selon l'une des revendications 1 à 4, **caractérisé en ce que** le lien (23) est sous la forme d'une chaîne ou chaînette, et **en ce que** ladite portion du lien est un maillon ou une portion de maillon de cette chaîne ou chaînette.

6. Accessoire (21) selon l'une des revendications 1 à 5, **caractérisé en ce qu'**il comprend une gaine ou une bande (36) de matière élastique étirable longitudinalement, qui présente des moyens de liaison permettant sa liaison aux moyens de liaison (35) que comprennent les paires respectives de pièces de liaison (28).

7. Accessoire (21) selon l'une des revendications 1 à 6, **caractérisé en ce que** :
- le moyen de liaison que comprend ladite au moins une pièce de liaison (28) de chaque paire de pièces de liaison est sous la forme d'un plot (35) en forme de champignon, c'est-à-dire présentant une portion de base et une tête élargie ;
- chaque moyen de liaison que comprend la housse (26) est sous la forme d'un trou apte à être inséré de manière ajustée sur ledit plot (35).

8. Accessoire (21) selon la revendication 6 et la revendication 7, **caractérisé en ce que** les moyens de liaison que comprend ladite gaine ou bande élastique (36) sont sous la forme de trous aptes à être insérés de manière ajustée sur les plots (35) que comprennent les paires de pièces de liaison (28).

9. Accessoire (21) selon l'une des revendications 1 à 8, **caractérisé en ce qu'**il inclut deux capuchons (27) aptes à être engagés sur les extrémités respectives de du lien (23) et de la housse (26), chaque capuchon (27) présentant une longueur telle qu'il recouvre les pièces de liaison (28) lorsqu'il est engagé sur l'extrémité de la chaînette (23) et de la housse (26), et comprend des moyens de liaison auxdites pièces de liaison.

10. Accessoire (21) selon l'une des revendications 1 à 9, **caractérisé en ce que** les deux pièces de liaison (28) d'une même paire de pièces de liaison sont reliées l'une à l'autre par une charnière-film (38) et **en ce que** les moyens respectifs d'assemblage de ces pièces (28) l'une à l'autre sont constitués par des moyens de prise (39, 40) à inter-engagement, situés sur un côté de ces deux pièces de liaison (28) opposé à celui sur lequel se trouve ladite charnière-film (38).

## Patentansprüche

1. Diebstahlsicheres Zubehörteil (21), umfassend ein Organ wie zum Beispiel einen Jeton (22) zur Entriegelung eines Schließsystems, mit dem ein mobiles Objekt wie zum Beispiel ein Einkaufswagen eines Supermarkts ausgestattet ist, ein Verbindungselement (23), das mit dem Organ (22) verbunden ist, eine Schleife oder einen Ring (24), der ebenfalls mit dem Verbindungselement (23) verbunden ist, angeordnet an einer Stelle dieses Letztgenannten, die beabstandet ist von jener, an der sich das Entriegelungsorgan (22) befindet, sowie eine längliche Hülle (26), in deren Innerem das Verbindungselement (23) platziert ist;
**dadurch gekennzeichnet, dass**:
- das Zubehörteil (21) zwei Paare von Verbindungsstücken (28) umfasst, die dazu ausgelegt sind, eine Verbindung zu realisieren zwischen dem Verbindungelement (23) und der Hülle (26) in der Längsrichtung des Verbindungselements (23), wobei die Verbindung derart ist, dass jedes Verbindungsstück (28), wenn es an dem Verbindungselement angreift, bezüglich des Verbindungselements (23) in dieser Längsrichtung unbeweglich ist; wobei jedes Verbindungsstück (28) eines Paars von Verbindungsstücken Montagemittel (31, 32; 39, 40) umfasst für seine Montage an dem anderen Verbindungsstück (28) des gleichen Paars von Verbindungsstücken, wobei die zwei Verbindungsstücke (28) dieses Paars von Verbindungsstücken somit aneinander montiert werden können, wobei sie zwischen sich den Bereich des Verbindungselements (23) einspannen; wobei wenigstens ein Verbindungsstück (28) von jedem Paar von Verbindungsstücken ferner ein Mittel (35) zur Verbindung mit der Hülle (26) umfasst; und
- die Hülle (26) Mittel umfasst, die ihre Verbindung mit den Verbindungsmitteln (35) erlauben, die die jeweiligen Verbindungsstücke (28) der Paare von Verbindungsstücken umfassen.

2. Zubehörteil (21) nach Anspruch 1, **dadurch gekennzeichnet, dass** es Montagemittel umfasst, die die Montage eines Endes des Verbindungselements an dem anderen Ende dieses Verbindungselements derart ermöglichen, dass das Verbindungselement derart auf sich selbst umgebogen werden kann, dass es eine Art von Gehänge eines Schlüsselanhängers bildet, und dass folglich das Zubehörteil als ein Schlüsselanhänger verwendet werden kann.

3. Zubehörteil (21) nach Anspruch 2, **dadurch gekennzeichnet, dass** die Verbindungsmittel, die jedes Paar von Verbindungsstücken bildet, ferner die Montagemittel bilden.

4. Zubehörteil (21) nach Anspruch 3, **dadurch gekennzeichnet, dass** die Montagemittel die Form einer Montage vom Bajonnettetyp haben, wobei eines der Verbindungsmittel einen Hohlraum mit einer rechteckigen Eingangsöffnung bildet, und das andere Verbindungsmittel einen T-förmigen Montagekopf bildet, der durch die Eingangsöffnung hindurch eingesetzt und dann um eine Viertelumdrehung derart geschwenkt werden kann, dass er in dem Hohlraum gehalten wird.

5. Zubehörteil (21) nach einem der Ansprüche 1 bis 4, **dadurch gekennzeichnet, dass** das Verbindungselement (23) die Form einer Kette oder eines Kettchens hat, und dass der Bereich des Verbindungselements ein Glied oder ein Gliedbereich dieser Kette oder Kettchens ist.

6. Zubehörteil (21) nach einem der Ansprüche 1 bis 5, **dadurch gekennzeichnet, dass** es eine Ummantelung oder ein Band (36) aus einem in Längsrichtung streckbaren elastischen Material umfasst, das Verbindungsmittel aufweist, die seine Verbindung mit den Verbindungsmitteln (35) ermöglichen, die die jeweiligen Paare von Verbindungsstücken (28) umfassen.

7. Zubehörteil (21) nach einem der Ansprüche 1 bis 6, **dadurch gekennzeichnet, dass**:
- das Verbindungsmittel, das das wenigstens eine Verbindungsstück (28) von jedem Paar von Verbindungsstücken umfasst, die Form eines pilzförmigen Stifts (35) hat, das heißt einen Basisbereich und einen vergrößerten Kopf aufweist;
- jedes Verbindungsmittel, das die Hülle (26) umfasst, die Form eines Lochs hat, das in geeigneter Weise an dem Stift (35) angesetzt werden kann.

8. Zubehörteil (21) nach Anspruch 6 und Anspruch 7, **dadurch gekennzeichnet, dass** die Verbindungsmittel, die die Ummantelung oder das elastische Band (36) umfasst, die Form von Löchern haben, an denen in geeigneter Weise die Stifte (35) angesetzt werden können, die die Paare von Verbindungsstücken (28) umfassen.

9. Zubehörteil (21) nach einem der Ansprüche 1 bis 8, **dadurch gekennzeichnet, dass** es zwei Hauben (27) enthält, die dazu ausgelegt sind, an den jeweiligen Enden des Verbindungselements (23) und der Hülle (26) anzugreifen, wobei jede Haube (27) eine derartige Länge aufweist, dass sie die Verbindungsstücke (28) bedeckt, wenn sie an dem Ende des Kettchens (23) und der Hülle (26) angreift, und Mittel zur Verbindung mit den Verbindungsstücken umfasst.

10. Zubehörteil (21) nach einem der Ansprüche 1 bis 9, **dadurch gekennzeichnet, dass** die zwei Verbindungsstücke (28) ein und desselben Paares von Verbindungsstücken miteinander durch ein Filmscharnier (38) verbunden sind, und dass die jeweiligen Mittel zur Montage dieser Stücke (28) aneinander durch Greifmittel (39, 40) mit Zwischeneingriff gebildet sind, die sich an einer Seite dieser zwei Verbindungsstücke (28) entgegengesetzt zu jener befinden, an der sich das Filmscharnier (38) befindet.

## Claims

1. Antitheft accessory (21) including an element, such as a token (22), for unlocking a deposit system equipping a movable object, such as a superstore shopping cart, a link (23), connected to said element (22), a loop or a ring (24) also attached to the link (23), located in a location of the latter remote from that on which the unlocking element (22) is located, and an elongated cover (26) inside which the link (23) is placed;
**characterized in that**:
- the accessory (21) comprises two pairs of connecting parts (28) for making a connection between the link (23) and the cover (26) in the longitudinal direction of the link (23), the connection being such that each connecting pair (28), when engaged on the link, is immobilized with respect to the link (23) **in that** longitudinal direction; each connecting part (28) of a pair of connecting parts comprises assembly means (31, 32; 39, 40) for its assembly to the other connecting part (28) of the same pair of connecting parts, the two connecting parts (28) of this pair of connecting parts being thus able to be assembled to each other by enclosing between them said portion of the link (23); at least one connecting part (28) of each pair of connecting parts further comprises means (35) for connecting to the cover (26); and
- the cover (26) comprises means for connecting it to the connecting means (35) which comprise the respective connecting parts (28) of said pairs of connecting parts.

2. Accessory (21) according to claim 1, **characterized in that** it comprises assembly means allowing assembly from one end of the link to the other end of this link, such that the link can be folded over itself so as to form a kind of key ring charm and that, consequently, the accessory can be used as a key ring.

3. Accessory (21) according to claim 2, **characterized in that** said connecting means formed by each pair of connecting parts also form said assembly means.

4. Accessory (21) according to claim 3, **characterized in that** the assembly means is in the form of a bayonet-type assembly, one of the connection means forming a cavity with a rectangular inlet opening, and the other connection means forming a T-shaped assembly head, capable of being engaged through said inlet opening and then pivoted over a quarter turn so as to be retained in said cavity.

5. Accessory (21) according to one of claims 1 to 4, **characterized in that** the link (23) is in the form of a chain or small chain, and **in that** said portion of the link is a chain link or a portion of a chain link of that chain or small chain.

6. Accessory (21) according to one of claims 1 to 5, **characterized in that** it comprises a sheath or strip (36) of longitudinally stretchable elastic material, which has connecting means for connecting it to the connecting means (35) which the respective pairs of connecting parts (28) comprise.

7. Accessory (21) according to one of claims 1 to 6, **characterized in that**:
- the connecting means which comprises said at least one connecting part (28) of each pair of connecting parts is in the form of a mushroom-shaped stud (35), i. e. having a base portion and an enlarged head;
- each connecting means that the cover (26) comprises is in the form of a hole that can be inserted in an adjustable manner on said stud (35).

8. Accessory (21) according to claim 6 and claim 7, **characterized in that** the connecting means which comprises said sheath or elastic band (36) are in the form of holes which can be inserted in a fitted manner on the studs (35) which comprise the pairs of connecting parts (28).

9. Accessory (21) according to one of claims 1 to 8, **characterized in that** it includes two caps (27) adapted to be engaged on the respective ends of the link (23) and the cover (26), each cap (27) having a length such that it covers the connecting parts (28) when engaged on the end of the chain (23) and the cover (26), and includes means for connecting to said connecting parts.

10. Accessory (21) according to one of claims 1 to 9, **characterized in that** the two connecting parts (28) of the same pair of connecting parts are connected to each other by a film hinge (38) and **in that** the respective means of connecting these parts (28) to each other are formed by interlocking gripping means (39, 40) located on one side of these two connecting parts (28) opposite to that on which said film-hinge (38) is located.
